# EUROPEAN PATENT APPLICATION

(11) **EP 4 390 199 A1**
(43) Date of publication of application: **26.06.2024**
(21) Application number: 23219491.0
(22) Date of filing: 21.12.2023
(51) Int. Cl.: F16K 31/50, F16K 39/02, F16K 31/60

(54) **SHUT-OFF VALVE FOR A HIGH-PRESSURE HYDROGEN DISTRIBUTION SYSTEM**

(30) Priority: 23.12.2022 IT 202200026784
(71) Applicant: OMB Saleri S.p.A. - Societa' Benefit, 25126 Brescia (IT)
(72) Inventor: MONDINELLI, Francesco, I-25126 BRESCIA (IT); SANTULLI, Renato, I-25126 BRESCIA (IT)
(74) Representative: Pulieri, Gianluca Antonio

(57) **Abstract**

A shut-off valve (1) for a high-pressure hydrogen distribution system comprises a valve body (2), a pin compartment (10) and a main pin (12) provided with a shutter portion (34), a tang (60) and a knob assembly (100). The main pin (12) is floating in the pin compartment (10) and is engaged with the tang (60). Moreover, the slip torque of the grip (122) of the knob assembly (100) on the knob base (102) of the knob assembly (100), during an opening maneuver, is greater than the slip torque during a closing maneuver.

## Description

### Field of the invention

The present invention belongs to the field of valves for adjusting high-pressure gas flow. In particular, the present invention relates to a manual shut-off valve for high-pressure hydrogen, usually arranged along a conduit of a gas distribution system to allow or prevent the flow through the conduit.

### Background art

There are many examples of shut-off valves and several applications. However, most of the solutions known today are poorly adapted to manage the flow of gas in case of high-pressure, because, due to the action applied by the high-pressure gas to some members of the valve, the opening or closing maneuvers are particularly demanding. Such drawbacks especially occur when adjusting the flow in hydrogen distribution systems, in which the gas is kept at particularly high pressures, e.g., 350, 700 or even 1000 bar.

Moreover, for such applications it is very important for an operator to immediately appreciate the state of the valve without errors, i.e., recognize whether it is open or closed and quickly maneuver it accordingly.

### Object of the invention

It is the object of the present invention to provide a shut-off valve for high-pressure hydrogen, which meets the needs of the industry and overcomes the drawbacks mentioned above.

Such an object is achieved by a shut-off valve according to claim 1. The dependent claims describe further advantageous embodiments of the invention.

### Brief description of the drawings

The features and advantages of the shut-off valve according to the present invention will become apparent from the following description, given by way of a nonlimiting example, according to the figures of the accompanying drawings, in which:

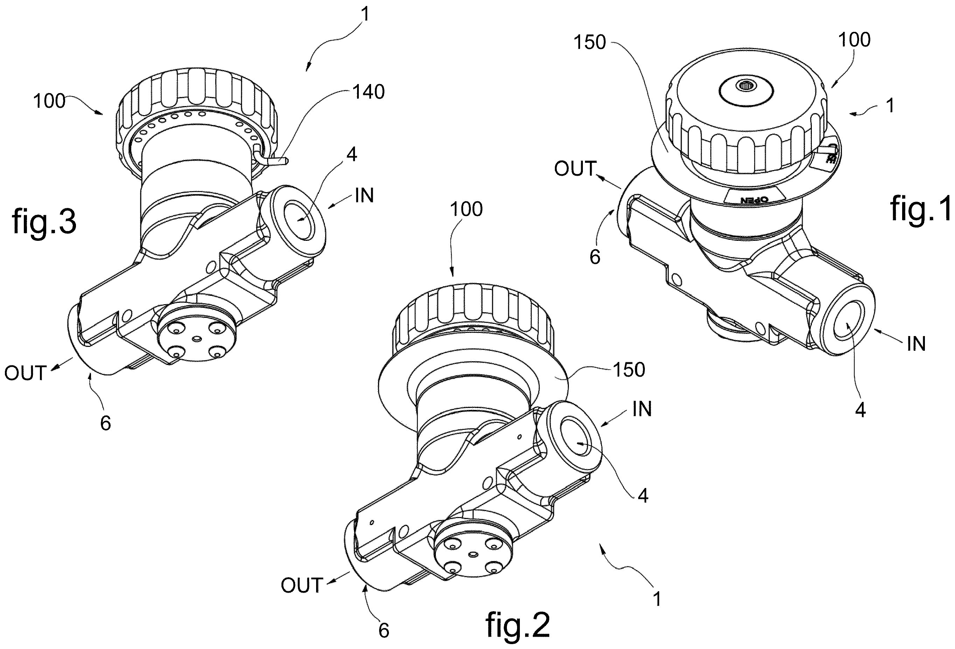

- figures 1 and 2 depict a shut-off valve according to an embodiment of the present invention;
- figure 3 depicts the shut-off valve, without a flange;

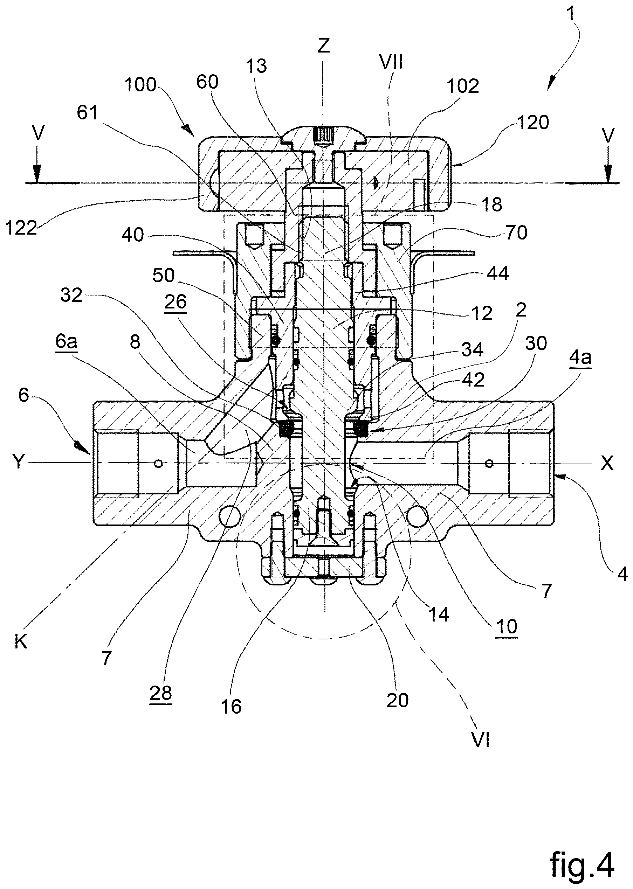

- figure 4 is a sectional view of the shut-off valve, in a complete opening configuration;

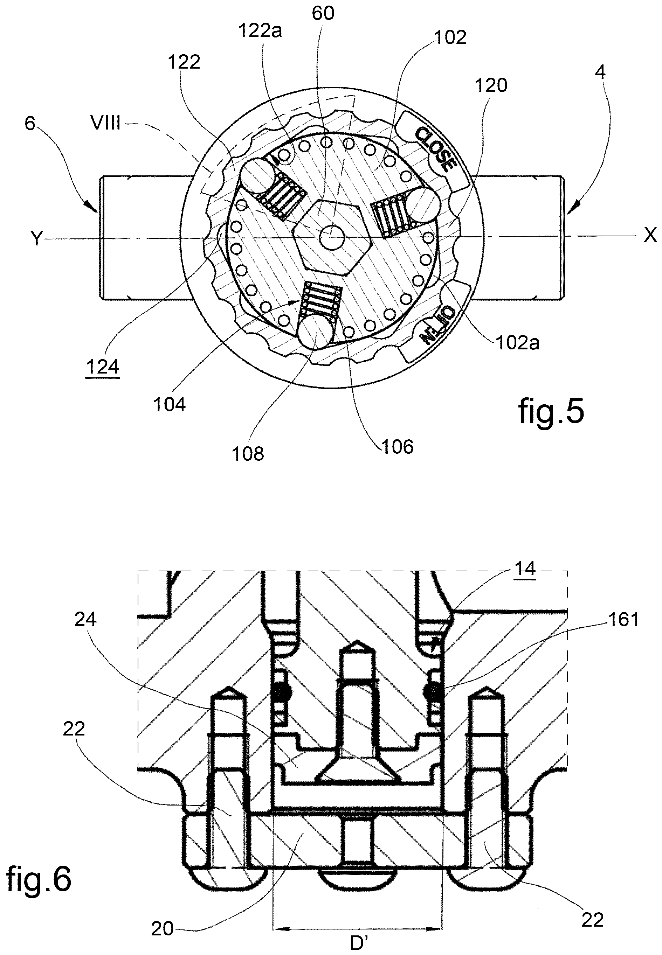

- figure 5 is a sectional view of the shut-off valve, according to the section plane V-V in figure 4;
- figure 6 is an enlarged view of the box VI in figure 4;

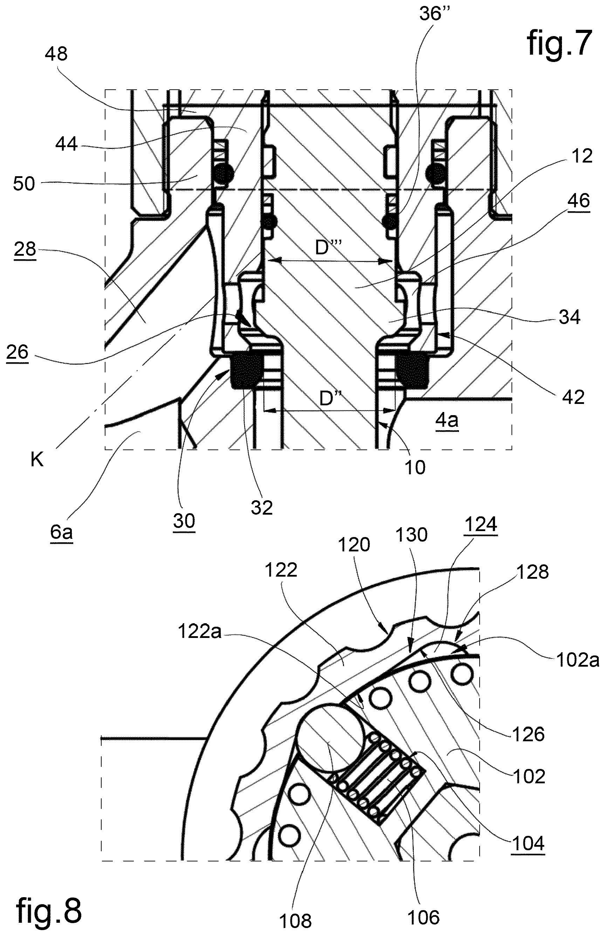

- figure 7 is an enlarged view of the box VII in figure 4;
- figure 8 is an enlarged view of the box VIII in figure 5;

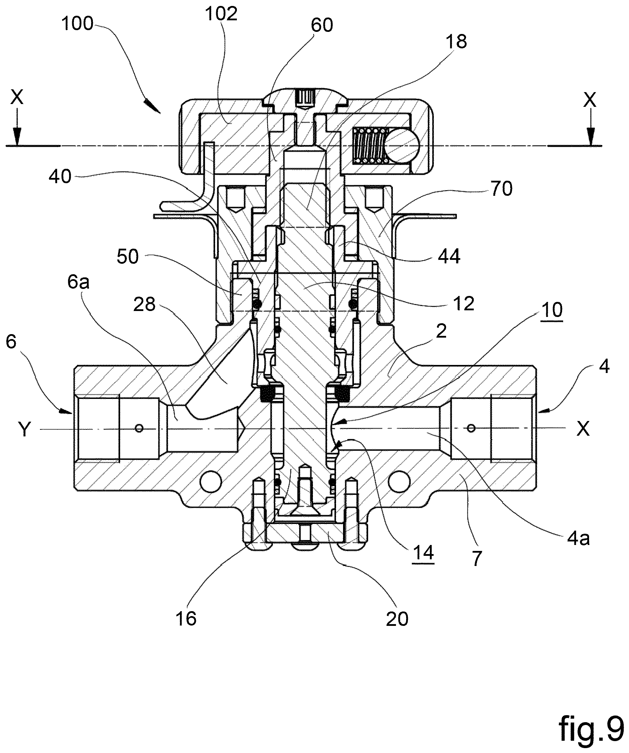

- figure 9 is a sectional view of the shut-off valve, in a complete opening configuration;

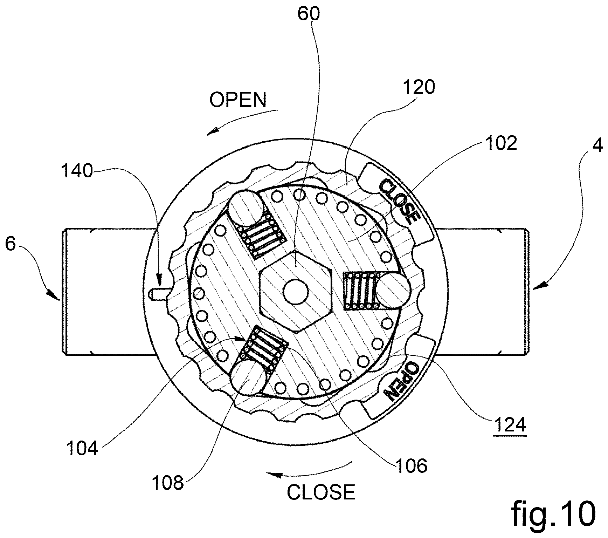

- figure 10 is a sectional view of the shut-off valve, according to the section plane X-X in figure 9;

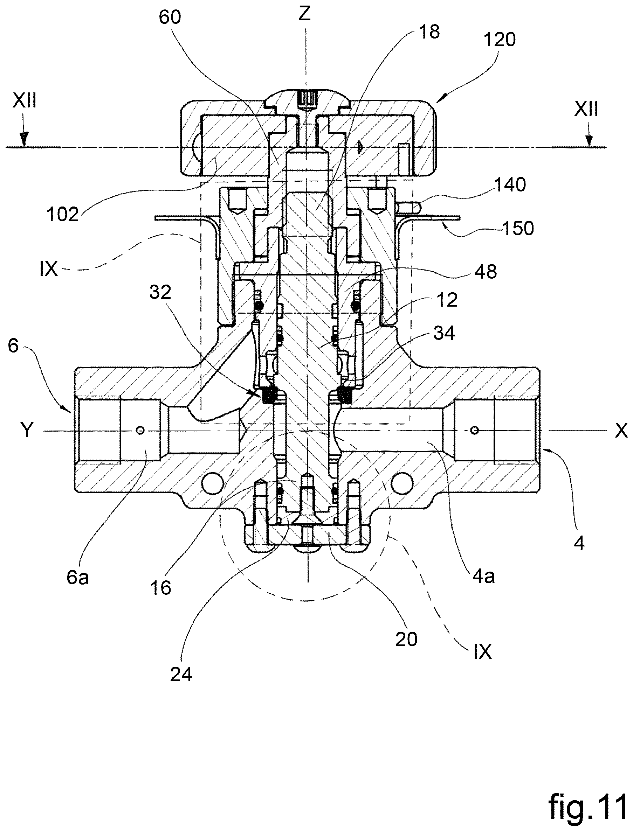

- figure 11 is a sectional view of the shut-off valve, in a complete opening configuration;
- figure 12 is a sectional view of the shut-off valve, according to the section plane XII-XII in figure 11;
- figure 13 is a constructional diagram of cavities of a knob assembly of the shut-off valve, according to an embodiment of the invention.

### Description of a preferred embodiment

With reference to the figures of the accompanying drawings, a shut-off valve for high-pressure hydrogen is indicated by reference numeral 1 as a whole, generally having a nominal pressure of more than 300 bar, e.g., 350 bar, or more than 500 bar, e.g., 700 bar, or more than 900 bar, e.g., 1000 bar. Such a valve is usually mounted to intercept the passage section of a conduit of a gas distribution system, for example configured to connect one or more tanks to one another in order to replenish one or more cylinders, even simultaneously.

The shut-off valve 1 comprises a valve body 2, for example made in one piece, preferably of a metal material, e.g., steel or aluminum. The valve body 2 comprises an inlet 4 for the connection with a segment upstream of the distribution system and an outlet 6 for the connection with a segment downstream of the system. The inlet 4 has a straight, central inlet axis X, while the outlet 6 has a straight, central outlet axis Y; preferably, the inlet axis X is coaxial to the outlet axis Y.

Preferably, the valve body 2 has an inlet conduit 4a extending from the inlet 4 coaxially to the inlet axis X and an outlet conduit 6a extending to the outlet 6, which are annularly delimited by a body wall 7 of the main body 2. The valve body 2 further comprises a separation wall 8, which axially separates, i.e., in the direction of the inlet axis X and the outlet axis Y, the inlet conduit 4a from the outlet conduit 6a.

The valve 1 further comprises a pin compartment 10, adapted to be placed in communication with the inlet conduit 4a, extending along a pin axis Z orthogonal to the inlet axis X and to the outlet axis Y, and a main pin 12 accommodated in the pin compartment 10, translatable along said pin axis Z and rotationally constrained.

The main compartment 10 has a lower portion 14 obtained in the body wall 7 of the main body 2.

The main pin 12 extends along the pin axis Z between a lower end 16, accommodated in the lower portion 14 of the pin compartment 10, and an upper end 18, at which a knob assembly 100 is placed, which will be discussed below. A lower sealing ring 16' is applied to the lower end 16, operating on a lower seal diameter D' of the lower portion 14, to make a lower seal of the main pin 12.

The lower portion 14 passes through the body wall 7 and is closed by a disk 20 fixed to the valve body 2, e.g., by means of screws 22. Advantageously, this allows making the lower portion 14 as a through hole by means of a tool, e.g., a broach or a reamer, thus managing to ensure very narrow machining tolerances and a high surface finishing.

Moreover, a protection 24, for example made of a polymer material, is preferably applied to the main pin 12 at the lower end 16, on the front head surface. Advantageously, this keeps the main pin 12 safe from knocks when inserted from above into the main compartment 10 when assembling the valve.

The inlet conduit 4a is placed in communication with the outlet conduit 6a by means of a main passage 26; moreover, downstream of the main passage 26, the valve body 2 preferably has an additional conduit 28 connecting the main passage 26 to the inlet conduit 6a and extending along an additional axis K inclined with respect to the outlet axis Y.

The main passage 26 crosses a main sealing seat 30 in which a main sealing ring 32 is accommodated. The main pin 12 further comprises a shutter portion 34 adapted to cooperate with the main sealing ring 32 to close the main passage 26, thus interrupting the fluid communication between the inlet conduit 4a and the outlet conduit 6a. The main sealing ring 32 and the shutter portion 34 of the main pin 12 come into contact, when the valve is in the closing configuration, along a contact surface of a main seal diameter D", forming a main seal of the main pin 12.

At the top of the shutter portion 34, i.e., downstream of the shutter portion 34, with reference to the gas flow from the inlet conduit 4a to the outlet conduit 6a, an upper sealing ring 36‴ is applied to the main pin 12, operating on an upper seal diameter D‴ of the main compartment 10, forming an upper seal of the main pin 12.

The lower seal diameter D' is equal to the main seal diameter D" and to the upper seal diameter D''', so that the main pin 12, both when the valve is in the opening configuration and when the valve is in the closing configuration, is floating under the action of the gas pressure.

Preferably, the valve 1 further comprises a tubular metal pipe 40 extending along said pin axis Z between an inner end 42 and an outer end 44. The internal compartment of the metal pipe 40 forms part of the main compartment 10, on which the upper sealing ring 36‴ operates.

At the inner end 42, the metal pipe 40 is configured so as to press the main sealing ring 32 into the main sealing seat 30 and also has a plurality of radial holes 46 for the gas to pass from the main passage 36 towards the outlet conduit 6a, for example towards the additional conduit 28.

For the correct positioning, the metal pipe 40 comprises a radially protruding metal pipe flange 48, abutting against a neck wall 50 of the valve body 2, which is annular with respect to the pin axis Z.

The additional axis K of the additional conduit 28 is inclined with respect to the outlet axis Y so as not to intersect the neck wall 50 of the valve body 2. Advantageously, this allows making the additional conduit by means of a drilling tip, which enters the valve body from the opening delimited by the neck wall 50.

The valve 1 further comprises an internally hollow tang 60 supported by the metal pipe 40, abutting against the outer end 44 thereof. The internal compartment of the tang 60 forms part of the pin compartment 10 and the upper end 18 of the main pin 18 is accommodated in said internal compartment of the tang 60.

The tang 60 is provided, for example internally, with a tang thread 61; the upper end 18 of the main pin 12 is provided, in turn, with a pin thread 13. The tang thread 61 is engaged with the pin thread 13. Preferably, said threads 13, 61 are multi-start, for example twostart. The rotation of the tang 60, actuated by the knob assembly 100, which will be discussed below, thus causes the main pin 12 to translate, the rotation of which is prevented by a shape-coupling, for example hexagonal, with the metal pipe 40.

Advantageously, the multi-start allows maneuvering the valve very quickly, since it allows switching from the maximum opening configuration to the closing configuration and vice versa causing the knob assembly to rotate less than a complete turn.

The valve 1 further comprises a tubular closing 70, fixable to the valve body 2, for example screwable outside the neck wall 50, so as to axially lock the metal pipe 40 and the tang 60.

The tang 60 axially protrudes above the closure 70 and a knob assembly 100 is applied thereto.

The knob assembly 100 comprises a knob base 102, for example discoidal, inserted onto the tang 60 and rotationally integral therewith, for example by means of a shape coupling, e.g., hexagonal.

Peripherally, on the outer side surface 102a, the knob base 102 has a plurality of knob seats 104 having a radial extension, which are open outwards. For example, three knob seats are provided, arranged to be angularly equally spaced apart.

An elastic element 106, such as a spring and, at least partially, a contrast element 108, such as a ball, radially pushed outwards by the respective elastic element 106, is housed in each knob seat 104.

The knob assembly 100 further comprises a grip 120 rotatably mounted on the knob base 102.

The grip 120 comprises a side wall 122 annularly surrounding the side surface 102a of the knob base 102 and having, on an inner side surface 122a facing the outer side surface 102a of the knob base 102, a plurality of cavities 124.

Each cavity 124 is adapted to accommodate one of said contrast elements 108.

Circumferentially, each cavity 124 has a nonsymmetrical profile with respect to a radial plane passing through the center line of said profile, so that the torque to be applied to the grip 120 for opening the valve, i.e., for switching from the closing configuration to the opening configuration, for example by rotating the grip clockwise, is different and particularly greater than the torque to be applied to the grip 120 for closing the valve, i.e., for switching from the opening configuration to the closing configuration, for example by rotating the grip anti-clockwise.

The cavity 124 preferably has a profile 126 comprising a recess 128 in which the contrast element 128 is at least partially stably accommodated, and an additional segment 130, for example flat, inclined to encourage the rolling movement towards the recess 128, placed upstream of the recess 128 with respect to the rotation direction of the grip 120 for closing the valve.

An indicator 140 is fixed to the knob base 102, while a flange 150, for example fixed to the closure 70, carries the indications "OPEN" and "CLOSE".

In a closing configuration, the main pin 12 is in a closing position, in which the shutter portion 34 presses on the main sealing ring 32, thus closing the main passage 26 and interrupting the fluid communication between the inlet conduit 4a and the outlet conduit 6a. For example, the main pin 12, and in particular the lower end 16, preferably abuts against the disk 20 by means of the protection 24.

In such a configuration, the indicator 140 points to the indication "CLOSE" shown on the flange 150. Each contrast element 108 is stably accommodated in a respective cavity 124 and subjected to the permanent action of the respective elastic element 106 being compressed.

Starting from the closing configuration, if the user tries to further rotate the grip 120 in a closing direction, for example clockwise, the abutment between the main pin 12 and the disk 20 creates a resistance until the torque applied by the user reaches a closing slip torque such as to cause the grip 120 to slip on the knob base 102, as the contrast elements 108 come out of the recess 128 of the respective cavity 124 and travel the flat segment 130 of the respective cavity 124 until, under the action of the respective elastic element 106, they snap back into the recess 128 of an adjacent cavity, emitting the typical clicking sound. Therefore, the user clearly perceives that the valve is in the closing configuration, without the pin having been forced.

Instead, starting from the closing configuration, if the user rotates the grip 120 in an opening direction, for example anti-clockwise, the rotation of the grip 120 causes the rotation of the knob base 102, which is made rotationally integral with the grip 120 by the action of the contrast elements 108 pushed into the cavities 124 by the elastic elements 106. The rotation of the knob base 102 causes the rotation of the tang 60 by virtue of the shape-coupling between the knob base 102 and the tang 60. The rotation of the tang 60 causes the main pin 12 to axially translate due to the multi-start threaded engagement between the upper end 18 of the main pin 12 and the tang 60 and the shape coupling between the main pin 12 and the metal pipe 48.

Therefore, starting from the closing configuration, if the user rotates the grip 120 in the opening direction, the valve switched to an intermediate or partial opening configuration, in which the main pin 12 is in an intermediate or partial opening position, in which the shutter portion 34 is detached from the main sealing ring 32, leaving the main passage 26 open and thus allowing the fluid communication between the inlet conduit 4a and the outlet conduit 6a.

In such a configuration, the indicator 140 is arranged between the indication "CLOSE" and the indication "OPEN" shown on the flange 150.

By further rotating the grip 120 in the opening direction, the valve reaches a complete opening configuration, in which the main pin 12 is in a complete opening position, in which the shutter portion 34 is detached from the main sealing ring 32, leaving the main passage 26 open to the maximum. For example, the main pin 12, preferably by means of the shutter portion 34, abuts against the metal pipe 40.

In such a configuration, the indicator 140 points to the indication "OPEN" shown on the flange 150. Each contrast element 108 is stably accommodated in a respective cavity 124 and subjected to the permanent action of the respective elastic element 106 being compressed.

Starting from the complete opening configuration, if the user tries to further rotate the grip 120 in the opening direction, for example in an anti-clockwise direction, the abutment between the main pin 12 and the metal pipe 40 creates a resistance until the torque applied by the user reaches an opening slip torque such as to cause the grip 120 to slip on the knob base 102, as the contrast elements 108 come out of the recess 128 of the respective cavity 124 and travel the flat segment 130 of the adjacent cavity 124 until, under the action of the respective elastic element 106, they snap back into the recess 128 of the adjacent cavity, emitting the typical clicking sound. Therefore, the user clearly perceives that the valve is in the complete opening configuration, without the pin having been forced.

The profile 126 of each cavity 124 is configured so that the opening slip torque is greater than the closing slip torque.

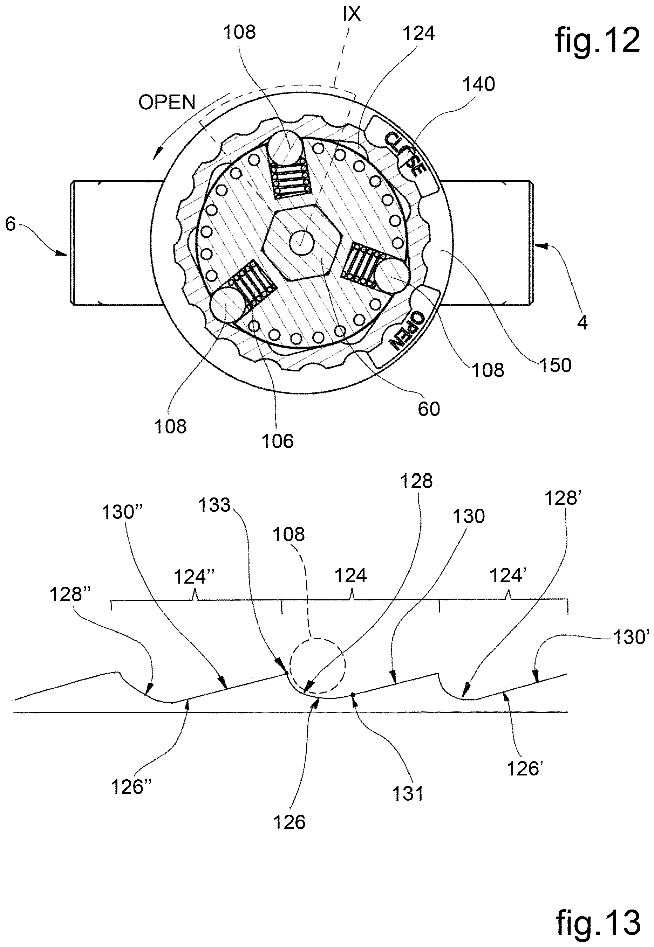

To this end, according to an embodiment (figure 13), a cavity 124 is adjacent to a right cavity 124', in which the contrast element 108 snaps when the knob is rotated in the closing direction, and a left cavity 124", in which the contrast element 108 snaps when the knob is rotated in the opening direction. The cavity 124 has a profile 126 consisting of a recess 128 and an additional segment 130; likewise, the right cavity 124' has a profile 126' consisting of a recess 128' and an additional segment 130' and the left cavity 124" has a profile 126" consisting of a recess 130" and an additional segment 130".

The contrast element 108 is stably accommodated in the recess 128 of the cavity 124. The additional segment 130 of the cavity 124 is very gently connected to the recess 128 of the cavity 124; for example, the additional segment 130 is tangential to the recess 128 in a connection zone 131. Instead, the additional segment 130'' of the left cavity 124" is sharply connected to the recess 128 of the cavity 124; for example, the additional segment 130" forms a corner 133 with the recess 128 in a connection zone. Therefore, the opening slip torque, which allows the additional segment 130" of the left cavity 124'' to cause the contrast element 108 to come out of the recess 128 and travel said additional segment 130'', is greater than the closing slip torque, which allows the additional segment 130 of the cavity 124 to cause the contrast element 108 to come out of the recess 128 and travel said additional segment 130.

In a constructional variant, the additional segment of the cavity is not tangential to the recess of the cavity, but also forms a corner; however, said corner is less marked than the corner formed between the recess of the cavity and the additional segment of the left cavity.

Advantageously, an opening slip torque greater than a closing slip torque, when the valve needs to be maneuvered to be closed, prevents an undesired slipping of the knob with respect to the knob base, which would make the closing maneuver difficult or even impossible.

Innovatively, the above-described shut-off valve overcomes the drawbacks mentioned with reference to the prior art and meets the needs in the industry, because the opening and closing maneuvers are particularly facilitated and the operator can immediately appreciate the opening or closing state of the valve without errors.

It is apparent that, in order to meet contingent needs, those skilled in the art could make changes to the above-described valve, all contained within the scope of protection as defined by the following claims.

## Claims

1. A shut-off valve (1) for a high-pressure hydrogen distribution system, comprising:
- a valve body (2), an inlet conduit (4a) extending along an inlet axis (X), an outlet conduit (6a) extending along an outlet axis (Y), a main passage (26) for connecting the inlet conduit (4a) and the outlet conduit (6a), a main sealing seat (30) crossed by the main passage (26), and a main sealing ring (32) accommodated in the main sealing seat (30);
- a pin compartment (10) in communication with the inlet conduit (4a) and a main pin (12) translatable into said pin compartment (10) and rotationally constrained, provided with a shutter portion (34), adapted to cooperate with the main sealing ring (32) to close the main passage (26), and a pin thread (13);
- a tang (60), provided with a tang thread (61), engaged with the pin thread (13) of the main pin (12), and a knob assembly (100), connected to the tang (60) and rotatable to cause said tang (60) to rotate;
- wherein, in a closing configuration of the valve, the shutter portion (34) is in contact with the main sealing ring (32) and closes the main passage (26) and, in an opening configuration of the valve, the shutter portion (34) is spaced apart from the main sealing ring (32) and the main passage (26) is open, and wherein, in the closing configuration and in the opening configuration, the main pin (12) is floating in the pin compartment (10) under the action of the pressure exerted by the gas; wherein the knob assembly (100) comprises:
- a knob base (102) threaded on the tang (60) and rotationally integral therewith, having an outer side surface (102a) and a plurality of knob seats (104) open on said outer side surface (102a) and circumferentially spaced apart;
- a plurality of elastic elements (106) and a plurality of contrast elements (108), an elastic element (106) and at least in part a contrast element (108) being housed in each knob seat (104), said contrast element being radially pushed outwards by the respective elastic element (106);
- a grip (120) rotatably mounted on the knob base (102), comprising a side wall (122) annularly surrounding the side surface (102a) of the knob base (102) and having, on an inner side surface (122a) facing the outer side surface (102a) of the knob base (102), a plurality of cavities (124), each contrast element (108) being accommodated in a cavity (124) to rotate the knob base (102) ;
wherein each cavity (124) circumferentially has a nonsymmetrical profile (126) with respect to a radial plane passing through the center line of said profile;
wherein said profile (126) is configured so that a slip torque of the grip (122) on the knob base (102) during an opening maneuver is greater than a slip torque during a closing maneuver.

2. A shut-off valve according to claim 1, wherein the main pin (12) realizes:
- a main seal by means of the main sealing ring (32) along a contact surface having a main seal diameter (D"); and
- upstream of the main seal, a lower seal with a lower portion (14) of the pin compartment (10) by means of a lower sealing ring (16') operating on a lower seal diameter (D') of the lower portion (14);
- wherein the lower seal diameter (D') is equal to the main seal diameter (D'').

3. A shut-off valve according to claim 2, wherein the main pin (12) realizes:
- downstream of the main seal, an upper seal with the main compartment (10) by means of an upper sealing ring (36‴) operating on an upper seal diameter (D‴) of the main compartment (10);
- wherein the main seal diameter (D") is equal to the upper seal diameter (D''').

4. A shut-off valve according to claim 2 or 3, wherein the lower portion (14) of the main compartment (10) is obtained in the valve body (2) in which the inlet conduit (4a) and/or the outlet conduit (6a) are further obtained.

5. A shut-off valve according to claim 4, wherein the lower part (14) passes through a body wall (7) of the valve body (2) and is closed by a disk (20) fixed to the valve body (2).

6. A shut-off valve according to anyone of the preceding claims, wherein
- the profile (126) of a first cavity (124) consists of a recess (128), adapted to stably accommodate the contrast element (108), and an additional segment (130), wherein the additional segment (130) is tangential to the recess (128) or forms a slightly marked corner in a connection zone (131) with said recess (128), and
- the profile (126") of a left cavity (124") adjacent to the first cavity (124) in a closing rotation direction consists of a recess (128"), adapted to stably accommodate the contrast element (108), and an additional segment (130"), wherein the additional segment (130") forms a highly marked corner (133) in a connection zone with said recess (128").

7. A shut-off valve according to any one of the preceding claims, wherein an indicator (140) is fixed to the knob base (102) and a flange (150) carrying "OPEN" and "CLOSE" indications is integral with the valve body (2).

8. A shut-off valve according to any one of the preceding claims, comprising a protection (24) made of a polymer material, applied at a lower end (16), on a front head surface, of the main pin (12).

9. A shut-off valve according to any one of the preceding claims, comprising a metal pipe (40) at least partially inserted into the valve body (2) to press the main sealing ring (32) into the main sealing seat (30) and keeping it in place, provided with a radially protruding metal pipe flange (48), abutting on a neck wall (50) of the valve body (2), which is annular with respect to the pin axis (Z).

10. A shut-off valve according to claim 9, having an additional conduit (28) connecting the main passage (26) to the outlet conduit (6a) and extending along an additional central axis (K) inclined with respect to the outlet axis (Y) and configured not to intersect the neck wall (50) of the valve body (2).

11. A shut-off valve according to claim 9 or 10, wherein the metal pipe (40) axially supports the tang (60).

12. A shut-off valve according to any one of the preceding claims, wherein the inlet axis (X) is coaxial to the outlet axis (Y).

13. A shut-off valve according to any one of the preceding claims, comprising a tubular closure (70), screwable to the valve body (2), configured to axially lock the tang (60) to the valve body (2).

14. A shut-off valve according to any one of the preceding claims, wherein the tang thread (61) and the pin thread (12) are multi-start threads, for example twostart threads.
